# EUROPÄISCHE PATENTSCHRIFT

(11) **EP 2 544 999 B1**
(45) Veröffentlichungstag und Bekanntmachung des Hinweises auf die Patenterteilung: **06.11.2019**
(21) Anmeldenummer: 11706849.4
(22) Anmeldetag: 09.03.2011
(51) Int. Cl.: C01B 33/037, C01B 33/029, C01B 33/02

(54) **VERFAHREN ZUR HERSTELLUNG VON HOCHREINEM SILIZIUM**
METHOD FOR PRODUCING HIGH PURITY SILICON
PROCÉDÉ DE PRODUCTION DE SILICIUM DE HAUTE PURETÉ

(30) Priorität: 09.03.2010 DE 102010011853
(43) Veröffentlichungstag der Anmeldung: 16.01.2013
(73) Patentinhaber: Schmid Silicon Technology GmbH, 72250 Freudenstadt (DE)
(72) Erfinder: HAHN, Jochem, 72108 Rottenburg (DE); KERAT, Uwe, 72270 Baiersbronn (DE); SCHMID, Christian, 72250 Freudenstadt (DE)
(74) Vertreter: Patentanwaltskanzlei Cartagena
(86) Internationale Anmeldenummer: PCT/EP2011/053504
(87) Internationale Veröffentlichungsnummer: WO 2011/110577

(56) Entgegenhaltungen:
- US-A- 4 304 763
- US-A- 4 377 564
- US-A- 4 379 777
- US-A1- 2004 175 192
- US-A1- 2010 032 630

## Beschreibung

Die vorliegende Erfindung betrifft ein Verfahren zur Herstellung von hochreinem Silizium.

Als Wafer werden dünne Scheiben oder Trägerplatten bezeichnet, auf denen elektronische, photoelektrische oder mikromechanische Vorrichtungen angeordnet werden. Solche Wafer bestehen meistens aus poly- oder monokristallinem Material, beispielsweise aus polykristallinem Silizium. Zur Herstellung solcher Wafer werden üblicherweise größere Blöcke aus einem entsprechenden Rohmaterial in einzelne Scheiben zerteilt, insbesondere zersägt. Derartige Materialblöcke werden auch als "Ingots" oder als "Bricks" bezeichnet.

Die Zerteilung erfolgt in der Regel mit Drahtsägen, bevorzugt insbesondere mit Mehrfachdrahtsägen, welche einen Block gleichzeitig in viele Wafer zerteilen. Zum Zersägen werden die Blöcke üblicherweise auf einer Trägerplatte angeordnet, die dann in einer Zerteilungs- oder Sägevorrichtung befestigt wird.

Beim Drahtsägen kommt als Werkzeug meist ein dünner Draht mit einem Durchmesser zwischen 80 µm und 200 µm zum Einsatz. Dieser wird in der Regel mit einer Suspension bestehend aus einem Trägermedium und einem darin suspendierten Abrasivmedium (auch als Schneidkorn bezeichnet) benetzt, dem sogenannten "Slurry". Als Trägermedien eignen sich insbesondere hochviskose Flüssigkeiten wie Glykol oder Öl, die aufgrund ihrer rheologischen Eigenschaften eine schnelle Ablagerung (Sedimentation) des suspendierten Schneidkorns verzögern. Als Abrasivmedien kommen vor allem Hartstoffpartikel aus Diamant, Carbiden und Nitriden (wie Siliziumcarbid und kubisches Bornitrid) zum Einsatz.

Streng genommen hat man es bei Verwendung eines solchen Slurrys nicht mit einem Sägeprozess zu tun. Beim Benetzen des Drahts kommt es nämlich nur zur losen Anhaftung von Abrasivmedium an der Drahtoberfläche. Man spricht deshalb auch oft von einem Trenn-Läpp-Verfahren. Bei einer definierten Bearbeitungsgeschwindigkeit wird der Draht mit den anhaftenden Schneidkornpartikeln durch den Sägespalt des zu zersägenden Blocks gezogen, wobei winzig kleine Materialpartikel aus dem zu zersägenden Block gerissen werden. Die herausgerissenen Materialpartikel vermischen sich dabei mit dem Abrasivmedium (dem Schneidkorn). Die entstehende Mischung aus Materialpartikeln, Schneidkorn und Trägermedium ist üblicherweise nur schwer verwertbar. Dies liegt darin begründet, dass bereits die Auftrennung von Trägermedium und den darin enthaltenen feinen Feststoffpartikeln aufgrund der hohen Viskosität des Trägermediums technisch recht aufwendig ist. Noch wesentlich problematischer ist jedoch eine saubere Auftrennung der enthaltenen Feststoffpartikel in klar definierte Fraktionen aus Schneidkorn und herausgerissenen Materialpartikeln.

Sowohl aus ökologischer als auch aus wirtschaftlicher Sicht ist dies äußerst unbefriedigend. Bei Drahtsägeprozessen wird ein nicht unerheblicher Teil der zu zersägenden Blöcke zerspant. Diese Blöcke werden selbst in vorgelagerten, sehr energie- und kostenintensiven Prozessen hergestellt. Die beim Drahtsägen auftretenden Materialverluste schlagen sich entsprechend in der Energiegesamt- und Kostenbilanz von Wafer-Herstellungsverfahren äußerst negativ nieder.

Es ist aus diesem Grund wünschenswert, technische Lösungen bereitzustellen, die das Recycling von bei Sägeprozessen anfallenden Abfallschlämmen erlauben, insbesondere das Recycling der darin enthaltenen aus dem zersägten Material stammenden Partikel.

Aus der US 4379777 A ist das Einbringen von Siliziumpartikeln in einen hocherhitzten Gasstrom (eine Mischung aus Argon und Wasserstoff) bekannt. Beschrieben wird, dass es dabei zu einem Aufschmelzen der Siliziumpartikel kommt. Anschließend werden die aufgeschmolzenen Partikel zügig abgekühlt, wobei sich in den Partikeln enthaltene Verunreinigungen auf ihrer Außenseite anreichern und anschließend chemisch und/oder mechanisch entfernt werden können. Bei dem beschriebenen Verfahren handelt es sich also um ein Reinigungsverfahren.

Die US 4377564 A befasst sich im Wesentlichen Beschichtungsprozessen, bei denen Silizium auf Oberflächen abgeschieden wird. Silizium wird hierbei direkt aus der Gasphase auf einem Festkörper abgeschieden wird. In diesem Zusammenhang wird auch die Reduktion von siliziumoxidhaltigen oder aus Siliziumoxid bestehenden Partikeln in einem Wasserstoffplasma beschrieben.

Aus der US 2010/0032630 A1 ist ein Verfahren zur chemischen Aufarbeitung von Siliziumstäuben bekannt. Hierbei werden die Siliziumstäube in Halogensilane überführt, destilliert und anschließend thermisch zersetzt.

Das Verfahren mit den Merkmalen des Anspruchs 1 ermöglicht ein Recycling von bei Sägeprozessen anfallenden Abfallschlämmen. Bevorzugte Ausführungsformen des erfindungsgemäßen Verfahrens finden sich in den abhängigen Ansprüchen 2 bis 8.

Ein erfindungsgemäßes Verfahren dient der Herstellung von Silizium, insbesondere von hochreinem Silizium, also von Silizium, das unmittelbar in der Halbleiterindustrie, beispielsweise zur Herstellung von Solarzellen, weiterverarbeitet werden kann, und umfasst stets zumindest die folgenden Schritte:
(1) Im üblicherweise ersten Schritt wird siliziumhaltiges Pulver bereitgestellt.
(2) In einem weiteren Schritt wird das siliziumhaltige Pulver in einen Gasstrom eingespeist. Wichtig ist dabei, dass das Gas eine ausreichend hohe Temperatur aufweist, um das Partikel aus metallischem Silizium aus dem festen in den flüssigen und/oder gasförmigen Zustand zu überführen. Partikel aus metallischem Silizium sollen also aufschmelzen, gegebenenfalls sogar mindestens teilweise oder sogar vollständig verdampfen, sobald sie in Kontakt mit dem Gasstrom getreten sind.
(3) Anschließend wird das sich in flüssigem Zustand befindliche Silizium gesammelt. Sofern der Gasstrom gasförmiges Silizium enthält, wird dieses zuvor mindestens teilweise kondensiert.
(4) Danach wird das gesammelte flüssige Silizium abgekühlt, dies vorzugsweise in einer Gussform, so dass idealerweise unmittelbar wieder ein Ingot oder Brick erzeugt wird.

Auf diese Weise erzeugte Ingots oder Bricks werden bevorzugt ohne weitere Aufarbeitung direkt wieder einem Drahtsägevorgang unterworfen.

Als siliziumhaltige Pulver kommen in einem erfindungsgemäßen Verfahren solche Pulver zum Einsatz, die beim Drahtsägen eines Siliziumblocks anfallen, insbesondere unter Verwendung von Sägen mit gebundenen Schneidpartikeln, also solchen Sägen, bei denen die Schneidpartikel fest an den Draht gebunden und somit Bestandteil des Drahtes sind. Das erfindungsgemäße Verfahren kann sich also unmittelbar an einen Drahtsägeprozess anschließen.

Im Gegensatz zu den eingangs beschriebenen herkömmlichen Verfahren kommt es beim Drahtsägen unter Verwendung von Sägen mit gebundenen Schneidpartikeln nicht zum Einsatz von Suspensionen aus Trägermedium und abrasiven Partikeln. Das Drahtsägen erfolgt stattdessen bevorzugt trocken oder unter Zugabe von Wasser, das als Kühlmedium dienen kann sowie zum Herausspülen von herausgerissenen Siliziumpartikeln aus dem Sägespalt. Auch die Verwendung anderer Flüssigkeiten als Kühlmedium ist möglich. Das Wasser oder die anderen Flüssigkeiten können diverse Prozessadditive enthalten, beispielsweise Korrosionsinhibitoren, Dispergierhilfen, Biozide oder antistatische Zusätze. Derlei Additive sind dem Fachmann bekannt und müssen deshalb nicht näher erläutert werden.

Geeignete Drahtsägen mit gebundenen Schneidpartikeln sind aus dem Stand der Technik bekannt. So ist z.B. in der DE 699 29 721 T2 eine Drahtsäge beschrieben, die einen Metalldraht und superabrasive Körner umfasst, die durch eine hartgelötete Metallbindung auf dem Draht befestigt sind. Die abrasiven Partikel sind dabei zumindest teilweise in eine metallische Matrix eingebettet. Sie bestehen bevorzugt aus Diamant, kubischem Bornitrid oder aus einer Mischung solcher Partikel.

Die Verwendung von Drahtsägen mit gebundenen Schneidpartikeln hat den entscheidenden Vorteil, dass der beim Drahtsägen entstehende feste Sägeabfall zum weitaus überwiegenden Anteil aus Siliziumpartikeln besteht. Diese können allenfalls mit Schneidpartikeln oder Schneidpartikelfragmenten verunreinigt sein, die beim Sägen aus dem Draht herausgebrochen sind oder aber mit metallischen Bestandteilen des Drahtes oder Rückständen der oben erwähnten Prozessadditive. Im Gegensatz zu Mischungen, wie sie bei den eingangs beschriebenen Drahtsägeprozessen unter Verwendung von nichtgebundenen Schneidpartikeln entstehen, eignen sich die anfallenden Siliziumstäube und -pulver entsprechend sehr viel besser zur Wiederaufarbeitung. Das Abtrennen eines hochviskosen Trägermediums entfällt vollständig. Bei Verwendung von Wasser sollte dieses zumindest weitgehend abgetrennt und das anfallende Siliziumpulver getrocknet werden.

Grundsätzlich ist auch die Verwendung von Siliziumpulver denkbar, das beim Drahtsägen unter Verwendung von Suspensionen aus Trägermedium und abrasiven Partikeln anfällt. Allerdings ist die Aufreinigung einer beim Drahtsägen mit einem Slurry entstehenden Mischung aus Materialpartikeln, Schneidkorn und Trägermedium im Vergleich sehr viel aufwendiger.

Die beim Drahtsägen entstehenden Siliziumpartikel weisen oft nur sehr geringe Partikelgrößen auf und sind in Folge ihrer entsprechend großen spezifischen Oberfläche sehr reaktiv. Mit Wasser z.B., das, wie oben erwähnt, als Kühlmedium beim Drahtsägen zum Einsatz kommen kann, können sie unter Bildung von Siliziumdioxid und Wasserstoff reagieren. Bei dem im üblicherweise ersten Schritt eines erfindungsgemäßen Verfahrens bereitgestellten siliziumhaltigen Pulver muss es sich entsprechend nicht zwingend um ein Pulver aus rein metallischen Siliziumpartikeln handeln. Das Pulver kann anteilig auch Siliziumpartikel umfassen, die oberflächlich zumindest leicht oxidiert sind, gegebenenfalls auch aus solchen Partikeln bestehen.

Im verwendeten siliziumhaltigen Pulver enthaltene Verunreinigungen werden bevorzugt zumindest weitgehend entfernt, bevor das Pulver in den hocherhitzten Gasstrom eingespeist wird. Eine solche Vorreinigung kann sowohl chemische als auch mechanische Reinigungsschritte umfassen.

Die chemische Reinigung des siliziumhaltigen Pulvers dient vor allem der Entfernung von gegebenenfalls enthaltenen metallischen Verunreinigungen sowie gegebenenfalls zur Entfernung einer oberflächlichen Oxidschicht. Hierzu kann das Siliziumpulver beispielsweise mit Säuren oder Laugen behandelt werden. Geeignet sind neben organischen Säuren z.B. auch Salzsäure, Flusssäure, Salpetersäure oder eine Kombination aus diesen Säuren, insbesondere in verdünnter Form. Eine geeignete Vorgehensweise ist z.B. in der DE 29 33 164 A1 beschrieben. Nach einer solchen Behandlung muss das Silizium in der Regel säurefrei gewaschen und getrocknet werden. Das Trocknen kann beispielsweise unter Zuhilfenahme eines inerten Gases, beispielsweise von Stickstoff, erfolgen. Die Trocknungstemperatur sollte dabei vorzugsweise über 100 °C liegen. Weiterhin kann es vorteilhaft sein, die Trocknung bei einem Unterdruck durchzuführen. Auch dies ist bereits in der DE 29 33 164 A1 beschrieben. Gegebenenfalls aus der chemischen Behandlung stammende Säure- und Wasserrückstände können so im Wesentlichen rückstandslos entfernt werden.

Weiterhin dient die chemische Reinigung gegebenenfalls auch der Entfernung von Rückständen der erwähnten Prozessadditive. Diese Rückstände können ebenfalls mit den bereits genannten Säuren und Laugen entfernt werden. Daneben oder stattdessen ist auch das Waschen des gesammelten Siliziumpulvers z.B. mit einem organischen Lösungsmittel oder einem sonstigen Reinigungsmittel denkbar.

Schwieriger als die Entfernung metallischer Verunreinigungen ist in der Regel die Abtrennung der erwähnten Schneidpartikel oder Schneidpartikelfragmente aus dem Pulver. In der Regel kann dies nur über einen oder mehrere mechanische Reinigungsschritte geschehen.

Da z.B. abrasiv wirkende Hartstoffpartikel aus Diamant und kubischem Bornitrid in der Regel eine deutlich höhere Dichte aufweisen als Silizium, kann eine Abtrennung beispielsweise mittels eines Fliehkraftabscheiders erfolgen. Hierzu kann das in einem Sägeprozess anfallende und gegebenenfalls anschließend chemisch aufgereinigte Siliziumpulver beispielsweise nach Korngrößen fraktioniert werden. Bei Einspeisung der einzelnen Fraktionen in einen Fliehkraftabscheider können die leichteren Siliziumpartikel bei geeigneter Einstellung diesen passieren, während schwerere Hartstoffpartikel abgeschieden werden. Grundsätzlich gilt, dass die Auftrennung kleiner Partikel aufwendiger ist als die großer. Es kann daher bevorzugt sein, nach der erwähnten Fraktionierung das Feingut, also die Fraktionen mit den kleinsten Partikeln, zu verwerfen und nur die Fraktionen mit den gröberen Partikeln in den Fliehkraftabscheider einzuspeisen.

Alternativ oder zusätzlich ist zur mechanischen Aufreinigung des gesammelten Siliziumpulvers auch der Einsatz von einem oder mehreren Hydrozyklonen möglich. Bei einem Hydrozyklon handelt es sich bekanntlich um einen Fliehkraftabscheider für Flüssiggemische, insbesondere zur Abtrennung von in Suspensionen enthaltenen Feststoffpartikeln. Vorgehensweisen zur Auftrennung von Stoffgemischen, die auch im Rahmen des vorliegenden Verfahrens zum Einsatz kommen können, sind z.B. in der DE 198 49 870 A1 und in der WO 2008/078349 A1 beschrieben.

Zur Abtrennung von metallischen Verunreinigungen kann übrigens auch ein Magnetabscheider zum Einsatz kommen. Beispielsweise kann ein aus einem Drahtsägeprozess resultierendes Gemisch aus Wasser, oberflächlich oxidierten Siliziumpartikeln und Stahlpartikeln aus der Matrix des verwendeten Drahtes über einen Magnetabscheider gefahren werden. Die Siliziumpartikel können diesen unbeeinflusst passieren.

Der in einem erfindungsgemäßen Verfahren verwendete Gasstrom, in den das Siliziumpulver eingespeist wird, wird in der Regel mittels eines Plasmagenerators erhitzt. Bei einem Plasma handelt es sich bekanntlich um ein teilweise ionisiertes Gas, das zu einem nennenswerten Anteil freie Ladungsträger wie Ionen oder Elektronen enthält. Erhalten wird ein Plasma stets durch äußere Energiezufuhr, welche insbesondere durch thermische Anregung, durch Strahlungsanregung oder durch Anregungen durch elektrostatische oder elektromagnetische Felder erfolgen kann. Vorliegend ist insbesondere die letztere Anregungsmethode bevorzugt. Entsprechende Plasmageneratoren sind kommerziell erhältlich und müssen im Rahmen der vorliegenden Anmeldung nicht näher erläutert werden.

Bei dem für den Gasstrom verwendeten Gas handelt es sich bevorzugt um Wasserstoff. In weiteren bevorzugten Ausführungsformen kann es sich bei dem Gas aber auch um ein Inertgas wie ein Edelgas oder um eine Mischung aus Wasserstoff und einem solchen Inertgas, insbesondere Argon, handeln. In diesem Fall ist das Inertgas in der Gasmischung bevorzugt in einem Anteil zwischen 1 % und 50 % enthalten.

Die Verwendung eines hocherhitzten wasserstoffhaltigen Gasstroms, insbesondere eines hocherhitzten Wasserstoffplasmas, hat insbesondere dann Vorteile, wenn das verwendete siliziumhaltige Pulver einen Anteil an Siliziumpartikeln umfasst, deren Oberfläche leicht oxidiert ist. Diese Oberfläche kann in der Wasserstoffatmosphäre unter Bildung von Wasser reduziert werden. Das entstehende Wasser kann anschließend problemlos abgeführt werden.

Besonders bevorzugt wird die Temperatur des Gases so gewählt, dass sie unterhalb von 3.000 °C, insbesondere unterhalb von 2.750 °C, insbesondere unterhalb von 2.500 °C, liegt. Besonders bevorzugt sind Temperaturen zwischen 1.410 °C (der Schmelztemperatur von Silizium) und 3.000 °C, insbesondere zwischen 1.410 °C und 2.750 °C. Innerhalb dieses Bereiches sind Temperaturen zwischen 1.410 °C und 2.500 °C weiter bevorzugt. Diese Temperaturen sind ausreichend hoch, um in den Gasstrom eingespeiste Siliziumpartikel zumindest zu schmelzen. Hartstoffpartikel wie Partikel aus Bornitrid oder aus Diamant schmelzen hingegen bei diesen Temperaturen nicht. Sofern derartige Partikel nicht bereits in einem früheren Verfahrensschritt abgetrennt wurden, ist dies spätestens nun in Folge der unterschiedlichen Aggregatzustände von Silizium und Hartstoffpartikeln möglich. Während flüssiges Silizium aus dem Gasstrom auskondensiert werden kann, können gegebenenfalls enthaltene feine Feststoffpartikel mit dem Gasstrom ausgetragen werden.

In besonders bevorzugten Ausführungsformen des erfindungsgemäßen Verfahrens wird dem Gasstrom neben dem siliziumhaltigen Pulver noch eine Siliziumverbindung zugesetzt, die bei Gastemperaturen in den genannten Bereichen thermisch zersetzt wird. Bei einer derartigen Verbindung handelt es sich bevorzugt um eine Siliziumwasserstoffverbindung, besonders bevorzugt um Monosilan (SiH₄). Auch der Einsatz von bei Raumtemperatur flüssigen Silanen ist grundsätzlich denkbar, diese werden ja spätestens beim Einspeisen in den hocherhitzten Gasstrom verdampft.

Die Herstellung von hochreinem Silizium durch thermische Zersetzung einer Silizium-Wasserstoff-Verbindung ist bereits bekannt, in diesem Zusammenhang wird beispielsweise Bezug genommen auf die DE 33 11 650 A1 und die EP 0181803 A1. In der Regel stammt die dabei zu zersetzende Siliziumverbindung aus einem mehrstufigen Prozess und führt bei ihrer Zersetzung zu Silizium von einer solch außerordentlich hohen Reinheit, wie sie für viele Anwendungen nicht zwingend erforderlich ist. Durch Zugabe von Siliziumstaub aus einem Sägeprozess, wie es in bevorzugten Ausführungsformen des erfindungsgemäßen Verfahrens vorgesehen sein kann, kann das aus der Siliziumverbindung gewonnene Silizium "gestreckt" werden. Das Mischungsverhältnis kann dabei im Grund beliebig eingestellt werden, abhängig vom jeweiligen Anwendungsfall.

Das Zersetzen einer Siliziumverbindung in einem hocherhitzten Gasstrom wurde bereits in der deutschen Patentanmeldung DE 10 2008 059 408 A1 beschrieben. Insbesondere wurde dort ausgeführt, dass bei der Zersetzung vorteilhafterweise ein Reaktor zum Einsatz kommt, in den der Gasstrom eingeleitet wird.

Auch vorliegend kommt es in bevorzugten Ausführungsformen zum Einsatz eines solchen Reaktors, in den der Gasstrom, in den das siliziumhaltige Pulver und gegebenenfalls die zu zersetzende Siliziumverbindung eingespeist werden, eingeleitet wird. Ein solcher Reaktor kann insbesondere zum bereits erwähnten Sammeln und gegebenenfalls zum Kondensieren des flüssigen und/oder gasförmigen Siliziums dienen. Insbesondere ist er dazu vorgesehen, die im Rahmen eines erfindungsgemäßen Verfahrens entstehende Mischung aus Trägergas, Silizium (flüssig und/oder gasförmig) und gegebenenfalls gasförmigen Zerfallsprodukten aufzutrennen. Nach Einspeisung des siliziumhaltigen Pulvers bzw. gegebenenfalls nach Einspeisen einer Siliziumverbindung in den hocherhitzten Gasstrom umfasst dieser ja nicht mehr nur ein entsprechendes Trägergas sondern eben auch noch weitere Bestandteile.

Der Reaktor umfasst in der Regel einen hitzebeständigen Innenraum. Damit der durch den hocherhitzten Gasstrom nicht zerstört wird, ist er in der Regel mit entsprechenden hochtemperaturbeständigen Materialien ausgekleidet. Geeignet sind beispielsweise Auskleidungen auf Basis von Graphit oder Si₃N₄. Dem Fachmann sind geeignete hochtemperaturbeständige Materialien bekannt. Innerhalb des Reaktors spielt insbesondere die Frage des Übergangs von gegebenenfalls gebildeten Siliziumdämpfen in die flüssige Phase eine große Rolle. Dafür ist natürlich die Temperatur der Reaktorinnenwände ein wichtiger Faktor, sie liegt daher in der Regel oberhalb des Schmelzpunkts und unterhalb des Siedepunkts von Silizium. Vorzugsweise wird die Temperatur der Wände auf einem relativ niedrigen Niveau (bevorzugt zwischen 1.420 °C und 1.800 °C, insbesondere zwischen 1.500 °C und 1.600 °C) gehalten. Der Reaktor kann dazu geeignete Isolier-, Heiz- und/oder Kühlmittel aufweisen.

Flüssiges Silizium sollte sich am Reaktorboden sammeln können. Der Boden des Reaktorinnenraums kann konisch ausgebildet sein, mit einem Ablauf am tiefsten Punkt, um das Abführen des flüssigen Siliziums zu erleichtern. Das Abführen des flüssigen Siliziums sollte idealerweise im Chargenbetrieb oder kontinuierlich erfolgen. Der Reaktor weist entsprechend bevorzugt einen dafür geeigneten Ablauf auf. Weiterhin muss natürlich auch das in den Reaktor eingeleitete Gas wieder abgeführt werden. Neben einer Zuleitung für den Gasstrom sollte dafür eine entsprechende Ableitung vorgesehen sein.

Der Gasstrom wird bevorzugt bei relativ hohen Geschwindigkeiten in den Reaktor eingeleitet, um eine gute Verwirbelung innerhalb des Reaktors zu erreichen. Im Reaktor herrscht bevorzugt ein Druck leicht oberhalb Normaldruck, insbesondere zwischen 1013 und 2000 mbar.

Mindestens ein Abschnitt des Reaktorinnenraums ist in bevorzugten Ausführungsformen im Wesentlichen zylindrisch ausgebildet. Die Einleitung des Gasstroms kann über einen in den Innenraum mündenden Kanal erfolgen. Die Mündung dieses Kanals ist insbesondere im oberen Bereich des Innenraums angeordnet, bevorzugt am oberen Ende des im Wesentlichen zylindrischen Abschnitts.

In einer besonders bevorzugten Ausführungsform des erfindungsgemäßen Verfahrens wird das gesammelte flüssige Silizium einer Vakuumbehandlung unterzogen, bevor es abgekühlt wird. Dadurch können metallische Verunreinigungen mit einem relativ hohen Dampfdruck, insbesondere solche wie Kupfer, Mangan und Chrom, abgetrennt werden. Bei Verwendung eines Reaktors erfolgt die Vakuumbehandlung bevorzugt unmittelbar nach dem Ablassen des flüssigen Siliziums aus dem Reaktor.

Weiterhin kann es bevorzugt sein, dass das gesammelte flüssige Silizium beim Abkühlen einer gerichteten Erstarrung unterworfen wird. Betreffend geeignete Durchführungsvorschriften wird im Hinblick auf diesen Schritt insbesondere auf die DE 10 2006 027 273 B3 und die oben bereits erwähnte DE 29 33 164 A1 verwiesen. In bevorzugten Ausführungsformen kann die in der DE 29 33 164 A1 beschriebene Vorgehensweise angewendet werden, gemäß der das Silizium in einen Schmelztiegel überführt wird und der gesamte Schmelztiegel langsam aus einer Heizzone abgesenkt wird. Im zuletzt erstarrenden Teil des in diesem Schritt hergestellten Siliziumblockes kommt es zu einer Anreicherung von Verunreinigungen. Dieser Teil kann mechanisch abgetrennt und gegebenenfalls dem Ausgangsmaterial wieder zugeschlagen werden.

## Patentansprüche

1. Verfahren zur Herstellung von hochreinem Silizium mit den Schritten
• Bereitstellen von siliziumhaltigem Pulver,
• Einspeisen des siliziumhaltigen Pulvers in einen Gasstrom, wobei das Gas eine ausreichend hohe Temperatur aufweist, um Partikel aus metallischem Silizium aus dem festen in den flüssigen und/oder gasförmigen Zustand zu überführen,
• Sammeln und gegebenenfalls Kondensieren des dabei entstehenden flüssigen und/oder gasförmigen Siliziums und
• Abkühlen des gesammelten flüssigen und/oder kondensierten Siliziums, vorzugsweise in einer Gussform, so dass unmittelbar wieder ein Siliziumblock erzeugt wird,
wobei es sich bei dem siliziumhaltigen Pulver zumindest teilweise um Pulver handelt, das beim Drahtsägen eines Siliziumblocks anfällt.

2. Verfahren nach Anspruch 1, **dadurch gekennzeichnet, dass** das siliziumhaltige Pulver einer chemischen und/oder einer mechanischen Reinigung unterzogen wird, bevor es in den Gasstrom eingespeist wird.

3. Verfahren nach einem der Ansprüche 1 oder 2, **dadurch gekennzeichnet, dass** der verwendete Gasstrom mittels eines Plasmagenerators erhitzt wurde.

4. Verfahren nach einem der vorhergehenden Ansprüche, **dadurch gekennzeichnet, dass** es sich bei dem Gasstrom um einen wasserstoffhaltigen oder einen aus Wasserstoff bestehenden Gasstrom handelt.

5. Verfahren nach einem der vorhergehenden Ansprüche, **dadurch gekennzeichnet, dass** dem Gasstrom eine Silizium-Verbindung zugesetzt wird, die bei der gewählten Gastemperatur thermisch zersetzt wird.

6. Verfahren nach einem der vorhergehenden Ansprüche, **dadurch gekennzeichnet, dass** der Gasstrom in einen Reaktor eingeleitet wird, in dem das Sammeln und gegebenenfalls Kondensieren des flüssigen und/oder gasförmigen Siliziums erfolgt.

7. Verfahren nach einem der vorhergehenden Ansprüche, **dadurch gekennzeichnet, dass** das gesammelte flüssige Silizium vor dem Abkühlen einer Vakuumbehandlung unterzogen wird.

8. Verfahren nach einem der vorhergehenden Ansprüche, **dadurch gekennzeichnet, dass** das gesammelte flüssige Silizium beim Abkühlen einer gerichteten Erstarrung unterworfen wird.

## Claims

1. Process for producing high-purity silicon, which comprises the steps
• provision of silicon-containing powder,
• feeding of the silicon-containing powder into a gas stream, where the gas has a temperature which is sufficiently high to convert particles of metallic silicon from the solid state into the liquid and/or gaseous state,
• collection and optionally condensation of the liquid and/or gaseous silicon formed and
• cooling of the collected liquid and/or condensed silicon, preferably in a casting mould, so that a silicon block is produced again directly,
wherein the silicon-containing powder is at least partly powder obtained during wire sawing of a silicon block.

2. Process according to Claim 1, **characterized in that** the silicon-containing powder is subjected to a chemical and/or mechanical purification before being fed into the gas stream.

3. Process according to either of Claims 1 and 2, **characterized in that** the gas stream used has been heated by means of a plasma generator.

4. Process according to any of the preceding claims, **characterized in that** the gas stream is a hydrogencontaining gas stream or a gas stream consisting of hydrogen.

5. Process according to any of the preceding claims, **characterized in that** a silicon compound which is thermally decomposed at the gas temperature selected is added to the gas stream.

6. Process according to any of the preceding claims, **characterized in that** the gas stream is introduced into a reactor in which the collection and optionally condensation of the liquid and/or gaseous silicon occurs.

7. Process according to any of the preceding claims, **characterized in that** the collected liquid silicon is subjected to a vacuum treatment before cooling.

8. Process according to any of the preceding claims, **characterized in that** the collected liquid silicon is subjected to directional solidification during cooling.

## Revendications

1. Procédé de fabrication de silicium hautement pur comprenant les étapes suivantes :
- la préparation d'une poudre contenant du silicium,
- l'introduction de la poudre contenant du silicium dans un courant gazeux, le gaz présentant une température suffisamment élevée pour transférer des particules de silicium métallique de l'état solide à l'état liquide et/ou gazeux,
- la collecte et éventuellement la condensation du silicium liquide et/ou gazeux ainsi formé, et
- le refroidissement du silicium liquide et/ou condensé collecté, de préférence dans un moule, de telle sorte qu'un bloc de silicium puisse immédiatement être de nouveau formé,
la poudre contenant du silicium consistant au moins partiellement en une poudre qui se forme lors de la découpe par une scie à fil d'un bloc de silicium.

2. Procédé selon la revendication 1, **caractérisé en ce que** la poudre contenant du silicium est soumise à une purification chimique et/ou mécanique avant d'être introduite dans le courant gazeux.

3. Procédé selon l'une quelconque des revendications 1 ou 2, **caractérisé en ce que** le courant gazeux utilisé a été chauffé au moyen d'un générateur de plasma.

4. Procédé selon l'une quelconque des revendications précédentes, **caractérisé en ce que** le courant gazeux consiste en un courant gazeux contenant de l'hydrogène ou constitué par de l'hydrogène.

5. Procédé selon l'une quelconque des revendications précédentes, **caractérisé en ce qu'**un composé de silicium qui est décomposé thermiquement à la température de gaz choisie est ajouté au courant gazeux.

6. Procédé selon l'une quelconque des revendications précédentes, **caractérisé en ce que** le courant gazeux est introduit dans un réacteur, dans lequel la collecte et éventuellement la condensation du silicium liquide et/ou gazeux ont lieu.

7. Procédé selon l'une quelconque des revendications précédentes, **caractérisé en ce que** le silicium liquide collecté est soumis à un traitement de mise sous vide avant le refroidissement.

8. Procédé selon l'une quelconque des revendications précédentes, **caractérisé en ce que** le silicium liquide collecté est soumis à une solidification dirigée lors du refroidissement.
